(19) **Europäisches Patentamt**
**European Patent Office**
**Office européen des brevets**

(11) **EP 1 494 858 B1**

(12) **EUROPEAN PATENT SPECIFICATION**

(45) Date of publication and mention
of the grant of the patent:
**30.06.2010 Bulletin 2010/26**

(51) Int Cl.:
**B32B 27/32** (2006.01)   **B32B 27/34** (2006.01)
**B29C 47/06** (2006.01)   **C08J 5/18** (2006.01)

(21) Application number: **03746501.0**

(22) Date of filing: **28.03.2003**

(86) International application number:
**PCT/NL2003/000242**

(87) International publication number:
**WO 2003/086757 (23.10.2003 Gazette 2003/43)**

(54) **MULTILAYER BLOWN FILM AND PROCESS FOR PRODUCTION THEREOF**

MEHRLAGIGE BLASFOLIE UND HERSTELLUNGSVERFAHREN DAFÜR

FILM TUBULAIRE A MULTIPLES COUCHES ET PROCEDE DE PRODUCTION DE CE DERNIER

(84) Designated Contracting States:
**AT BE BG CH CY CZ DE DK EE ES FI FR GB GR HU IE IT LI LU MC NL PT RO SE SI SK TR**

(30) Priority: **15.04.2002  NL 1020393**
**27.06.2002  NL 1020952**

(43) Date of publication of application:
**12.01.2005  Bulletin 2005/02**

(73) Proprietor: **DSM IP Assets B.V.**
**6411 TE Heerlen (NL)**

(72) Inventors:
• **DE KROON, Jan**
**NL-6093 JH Heythuysen (NL)**

• **BRINK, Ted**
**NL-6211 XR Maastricht (NL)**
• **NIJENHUIS, Atze, Jan**
**NL-6132 HB Sittard (NL)**

(74) Representative: **Krijgsman, Willem**
**DSM Intellectual Property**
**Office Geleen**
**P.O. Box 9**
**6160 MA Geleen (NL)**

(56) References cited:
**EP-A- 1 216 823    WO-A-97/47468**

## Description

The invention relates to a process for producing by blown film process a multilayer film containing at least a polyamide layer and a polyolefin layer. Such a process is often used for producing for example agricultural film and packaging film for, for example, foodstuffs. The polyolefin layer imparts to the film certain properties such as high tear strength when linear low-density polyethylene (LLDPE) is used as polyolefin or good surface gloss when polypropylene is used as polyolefin, whilst as a rule the polyamide layer is intended to impart barrier properties to the film.

A problem of the known process is that combinations of polyamide layers and polyolefin layers that in themselves are sufficient to impart a desired combination of properties to the film often are difficult to process by blown film process. A suitable setting of the blown film process device proves difficult to find, and in addition such setting must be maintained within narrow limits. This renders the process difficult and little flexible, particularly in terms of production rate and blow-up ratio.

A known solution to this problem is to admix, in particular in the polyolefin, a material that improves processability in a blown film process. Another known solution is to add a layer of for example LDPE to provide the required bubble stability. The addition of an extra layer is both technically complex and more costly.

The invention aims to provide a process for blown film as mentioned in the opening lines with the mentioned problems and drawbacks being completely or partly avoided.

This aim is achieved by the process according to the invention by a branched polyamide being used as polyamide.

It has been found that a film bubble containing the mentioned layers possesses better stability and can be blown at a higher throughput than when non-branched polyamide is used. Films having the desired combinations of layer thickness and properties, which otherwise can be realized only by addition of another material to the polyolefin layer or by addition of an extra layer to the film can be produced at a high production rate. Due to the presence of the branched nylon, even in combination with for example LLDPE and PP, that are known for poor bubble stability, bubble stability is comparable with that of the combination of non-branched polyamide with low-density polyethyelene (LDPE), which is known for its excellent processability through blown film process.

Blown film process, including blown film process of multilayer films, is a process known per se that may be applied in its known embodiments in the process according to the invention, which process does not impose any special requirements therefor.

WO 97/47468 discloses a process for film blowing a multilayer film comprising a polyamide layer and a polyolefin layer.

As branched polymer use may be made of the known branched polymers **characterized in that** at least 50% of the polymer chains possesses more than one chain branch or in that the polyamide molecule contains at least a star-shaped section. Branched polymers are known from for example EP-A-345 648, WO-00/35992 and WO-97/24388. It is preferred to use gel-free branched polyamides such as those known from WO-00/35992. These give films of highly uniform appearance without the irregularitiers caused by gels. These may be characterized as intrinsically gel-free, randomly branched polyamides at least composed of units derived from:

1. AB monomers, which are understood to be a monomer possessing both a carboxylic acid group (A) and an amine group (B).
2. at least one compound 1, being a carboxylic acid ($A_v$) with functionality $v \geq 2$ or an amine ($B_w$) with functionality $w \geq 2$,
3. at least one compound II, being a carboxylic acid ($A_v$) with functionality $v \geq 3$ or an amine ($B_w$) with functionality $w \geq 3$, with compound II being a carboxylic acid if compound I is an amine is or with compound II being an amine if compound I is a carboxylic acid, **characterized in that** the amounts of units derived from all carboxylic acids and amines in the polyamide satisfy formula 1

$$P < 1 / [(F_A - 1).(F_B - 1)] \qquad (1)$$

where:

$$P = [\Sigma(n_i.f_i)]_X / [\Sigma(n_i.f_i)]_Y \qquad (2)$$

where $P \leq 1$ and either $X = A$ and $Y = B$, or $X = B$ and $Y = A$ and

$$F = \Sigma (n_i.f_i^2) / \Sigma (n_i.f_i) \qquad (3)$$

for, respectively, all carboxylic acids ($F_A$) and amines ($F_B$), wherein $f_i$ is the functionality of a carboxylic acid (v) or amine (w) i, $n_i$ the number of moles of a carboxylic acid or amine and the summation is conducted for all units derived from carboxylic acids and amines in the polyamide. These give films with a highly uniform appearance, without the irregularities caused by gels. Highly suited for application in the processs according to the invention is branched polyamide wherein caprolactam is the predominant monomer unit.

As material in the polyolefin layer use is made of the known polyolefins, in particular homopolymers of ethylene and copolymers thereof with one or more α-olefins and homopolymers of propylene and copolymers thereof with one or more α-olefins, in particular ethylene. The gain in bubble stability and production rate manifest themselves in particular when the polyolefin layer consists essentially of a polyolefin that, in a blown film process, in itself possesses insufficient bubble stability in order for it to be processed into a film in a technically and economically acceptable manner. Examples hereof are LLDPE and polypropylene.

LLDPE is used in multilayer films for imparting high tear strength to the film but in itself can hardly be processed into a blown film in combination with the non-branched polyamide used according to the state of the art. A solution to this problem often applied in practice is to replace a proportion of the LLDPE with another polyethylene, for example LDPE or HDPE. This does improve bubble stability but the presence of the other polyethylene results in a significant decrease in tear strength.

The advantages of the process according to the invention thus best manifest themselves when LLDPE is used as material for a second layer in the film, even when the LLDPE layer contains at most 5 wt.% down to completely no other polyethylene. LLDPE is a form of polyethylene known per se to one skilled in the art. It is a copolymer of ethylene and one or more α-olefins that can be traced back in the end product as short side chains, produced in a low-pressure process and having a density of 870 - 940 kg/m$^3$, more in particular of 900-930 kg/m$^3$. The material distinguishes itself from low-density polyethylene (LDPE) by the short side chains, in contrast to the long side chains present in LDPE and from high-density polyethylene (HDPE) by low crystallinity.

The LLDPE layer then consists essentially of LLDPE, which should be taken to mean that it contains at most 10% and preferably at most 8% of another polyethylene not being LLDPE and in addition only the customary additives, examples of which are thermal and UV-stabilizers and release agents. The LLDPE layer *may* contain 10-50% of a modified LLDPE as adhesion modifier. Suitable modified LLDPEs are those which are described below as being suitable for use as adhesive layer between the polyamide layer and the LLDPE layer. Such LLDPE layers in combination with a layer of non-branched nylon cannot in general be blown to form a film bubble with sufficient bubble stability.

The advantages of the the process according to the invention are particularly prominent in that it is possible to use also LLDPE containing not more than 5% or even 0% of another polyethylene with good bubble stability. In that case, the high tear strength of the LLDPE is utilized to maximum effect with optimum layer thicknesses.

All polyethenes other than LLDPE are in principle suitable as the other polyethylene that may be admixed in the LLDPE layer. Examples hereof are (LDPE) and high-density polyethylene (HDPE) produced with the Ziegler-Natta and metallocene catalysts known per se for the purpose.

If polypropylene is used as polyolefin, the advantages of the process according to the invention best manifest themselves when linear polypropylene is used, which in itself cannot be applied in a blown film process or can be applied in such process only with great difficulty and at a low production rate. The Melt Flow Index of the polypropylene is preferably between 0.5 and 5 g/10 min.

As a rule, in the process according to the invention the polyamide layer preferably is adjacent to the polyolefin. Application of the polyamide layer and the polyolefin layer as adjacent functional layers directly connected to each other or connected by an adhesive layer has been found to yield the highest bubble stability. The layers may thus be directly adjacent to each other but an adhesive layer may also be present between the layers. Examples of suitable materials for these adhesive layers are modified polyolefins such as LDPE, LLDPE, metallocene PE, polyethylene-vinyl alcohol, polyethylene-acrylic acid, polyethylene-methacrylic acid and polypropylene that are grafted with at least one compound chosen from the group of α,β-unsaturated dicarboxylic acids, for example maleic acid, fumaric acid and itaconic acid and anhydrides, acidic esters, acidic imides and acidic imines thereof. Modified copolymers of ethylene and the aforementioned dicarboxylic acids may also be applied as adhesive layer in the manner indicated.

If the layers are directly adjacent to each other, the polyolefin layer preferably consists of a mixture of the polyolefin and a modified polyolefin referred to as being suitable as an adhesive layer for promoting adhesion between the polyolefin layer and the polyamide.

The polyamide layer may also be adjacent to a polyolefin layer on two sides, for example an LLDPE layer, and the other way round. The formed film then contains for example a PA-LLDPE-PA or LLDPE-PA-LLDPE sandwich structure.

Besides the mentioned layers, one or more other functional layers may also be applied. Layers often used in multilayer film are those which consist of for example ethylene-vinylalcohol and ionomers.

The total thickness of multilayer films that are produced in practice by blown film process and also by the process according to the invention is between 20 and 300 μm. In the process according to the invention the polyolefin layer in the multilayer film preferably has a thickness of at least 10 μm. The upper limit of the thickness is given by the intended application and the properties required therefor and extends in practice to approx. 100 μm. The branched-polyamide layer has a thickness of at least 2 μm and preferably of at least 20% of the thickness of the polyolefin layer, up to a maximum of 150, preferably 100 μm. Any other layers present have such thicknesses that they are able to perform their intended function during the production process or in the multilayer film to be formed.

The blow-up ratios applied in the process according to the invention prove to be able to be chosen higher than when the conventional non-branched polyamide is applied. Blow-up ratios of more than 10% and even 20%-40% higher have proved possible in the process according to the invention, which thus possesses significantly higher flexibility than the known process. The invention also relates to a multilayer film containing at least a polyamide layer and a polyolefin layer connected thereto, characetrized in that the polyamide is a branched polyamide.

The film according to the invention possesses excellent barrier properties and properties introduced by the polyolefin layer at a lower thickness than the known film with non-branched nylon.

In particular, when LLDPE is used as polyolefin, the film possesses high tear strength in comparison with the amount of polyethylene present in the film and may possess the desired good barrier and tear strength properties at low total thickness. In the case of application of a polyolefin consisting essentially, i.e. at least 95%, of polypropylene there is obtained a thin film with good surface properties such as high gloss.

Each polyolefin layer may be connected to the adjacent PA layer since an adhesion modifier, in particular a modified polyolefin as described above for this purpose, is present in the polyolefin. A separate adhesive layer as described above for this purpose may also be present.

The invention is elucidated with reference to the following examples and comparative experiments.

Comparative Experiment A and Example I

In a Bandera blown film line equipped with 3 extruders each having an annular die 100 mm in diameter there was blown a film bubble consisting of two outer layers of a PE mixture consisting of 60 wt.% LLDPE, 30 wt.% LDPE and 10 wt.% Yparex™ OH040, an MZA-modified LLDPE, as adhesion modifier and a polyamide intermediate layer. The LLDPE was a copolymer of ethylene and butene with a Melt Flow Index (ASTM D-1238, 2.16 kg, 190°C) of 2.7 g/10 min, a melting point of 125 °C and a density of 928 kg/m$^3$. The barrel temperature of the extruders was 250 °C and the head temperature 260°C. The blow-up ratio was 2.1.

The total thickness of the blown film was 25 $\mu$m, made up of 2 PE outer layers each of 10 $\mu$m and a polyamide intermediate layer of 5 $\mu$m.
In Comparative Experiment A use was made of Akulon™ F126-C, a non-branched polyamide-6, as polyamide and in Example I a branched polyamide made, according to the process of WO00/35992, from 97 parts by weight of caprolactam, 0.62 part by weight of bis-hexamethylene-triamine, 0.42 part by weight of adipic acid and 0.71 part by weight of benzoic acid with a relative viscosity (measured in a 1 mass% solution in 90% formic acid at 25°C) of 2.80.

The Elmendorf tear strength measured in the direction of extrusion was 27 kN/m and 25 kN/m, respectively. The bubble stability in Example I was markedly better than in Comparative Experiment A.

Comparative Experiment B

The process of Comparative Experiment A was repeated except that as PE layer use was made of a layer consisting of 90 wt.% LLDPE and 10 wt.% Yparex OH040. It proved impossible to control the process in such a way as to obtain a bubble of sufficient stability.

Examples II and III

The process of Example I was repeated except that the PE layers consisted of 90 wt.% LLDPE and 10 wt.% Yparex OH040 as adhesion modifier. The blow-up ratio in Example I was 2.1 and in Example II 2.5. The Elmendorf tear strength measured in the direction of extrusion was 104 kN/m and 98 kN/m, respectively.

From the foregoing it is clear that, where non-branched nylon is used, the presence of an amount of LDPE is indispensible if a stable film bubble is to be obtained. Also, it is clear that, by using a branched nylon, it is possible to produce a blown film with PE layers containing either only LLDPE or a mixture of LLDPE and another polyethylene, with the films in which the PE in the PE layer consists of only LLDPE possessing a markedly higher tear strength.

**Claims**

1. Process for producing by blown-film process a multilayer film containing at least a polyamide layer and a polyolefin layer, **characterized in that** a branched polyamide is used as polyamide.

2. Process according to claim 1 wherein the polyolefin layer consists essentially of LLDPE.

3. Process according to claim 2 wherein the LLDPE contains at most 5% of another polyethylene.

4. Process according to claim 1 wherein the polyolefin layer consists essentially of polypropylene.

5. Multilayer film containing at least a polyamide layer and a polyolefin layer directly connected thereto or connected thereto by an adhesive layer, **characterized in that** the polyamide is a branched polyamide.

6. Multilayer film according to claim 5 wherein one or more polyolefin layers are polyethylene layers, which polyethylene layers, other than adhesive layers, if present, contain only polyethylene which is at least 95% linear low-density polyethylene.

7. Multilayer film according to claim 5, wherein the polyolefin layer consists essentially of polypropylene.

## Patentansprüche

1. Verfahren zur Herstellung einer Mehrschichtfolie, die mindestens eine Polyamidschicht und eine Polyolefinschicht enthält, nach einem Blasfolienverfahren, **dadurch gekennzeichnet, daß** man als Polyamid ein verzweigtes Polyamid verwendet.

2. Verfahren nach Anspruch 1, bei dem die Polyolefinschicht im wesentlichen aus LLDPE besteht.

3. Verfahren nach Anspruch 2, bei dem das LLDPE höchstens 5% eines anderen Polyethylens enthält.

4. Verfahren nach Anspruch 1, bei dem die Polyolefinschicht im wesentlichen aus Polypropylen besteht.

5. Mehrschichtfolie, die mindestens eine Polyamidschicht und eine unmittelbar oder über eine Klebstoffschicht damit verbundene Polyolefinschicht enthält, **dadurch gekennzeichnet, daß** es sich bei dem Polyamid um ein verzweigtes Polyamid handelt.

6. Mehrschichtfolie nach Anspruch 5, wobei es sich bei einer oder mehreren Polyolefinschichten um Polyethylenschichten handelt, welche außer eventuell vorhandenen Klebstoffschichten nur Polyethylen, das zu mindestens 95% aus linearem Polyethylen niederer Dichte besteht, enthalten.

7. Mehrschichtfolie nach Anspruch 5, wobei die Polyolefinschicht im wesentlichen aus Polypropylen besteht.

## Revendications

1. Procédé de production par un procédé de film tubulaire d'un film à multiples couches contenant au moins une couche de polyamide et une couche de polyoléfine, **caractérisé en ce qu'**un polyamide ramifié est utilisé comme polyamide.

2. Procédé selon la revendication 1, dans lequel la couche de polyoléfine est constituée essentiellement de LLDPE.

3. Procédé selon la revendication 2, dans lequel le LLDPE contient 5 % ou moins d'un autre polyéthylène.

4. Procédé selon la revendication 1, dans lequel la couche de polyoléfine est constituée essentiellement de polypropylène.

5. Film à multiples couches contenant au moins une couche de polyamide et une couche de polyoléfine directement rattachée à cette dernière ou rattachée à cette dernière par une couche adhésive, **caractérisé en ce que** le polyamide est un polyamide ramifié.

6. Film à couches multiples selon la revendication 5, dans lequel une ou plusieurs couches de polyoléfine sont des couches de polyéthylène, lesquelles couches de polyéthylène, autres que les couches adhésives, si présentes, ne contiennent que du polyéthylène qui est constitué d'au moins 95 % de polyéthylène basse densité linéaire.

7. Film à couches multiples selon la revendication 5, dans lequel la couche de polyoléfine est constituée essentiellement de polypropylène.

**EP 1 494 858 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9747468 A
- EP 345648 A
- WO 0035992 A
- WO 9724388 A